(19) Europäisches Patentamt
European Patent Office
Office européen des brevets

(11) **EP 4 597 426 A1**

(12) **EUROPEAN PATENT APPLICATION**

(43) Date of publication:
**06.08.2025  Bulletin 2025/32**

(21) Application number: **25155071.1**

(22) Date of filing: **30.01.2025**

(51) International Patent Classification (IPC):
**G06T 7/292** (2017.01)     **G06T 7/70** (2017.01)

(52) Cooperative Patent Classification (CPC):
**G06T 7/292; G06T 7/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024  GB 202401409**

(71) Applicant: **Beyond Sports B.V.**
**1823 CJ Alkmaar (NL)**

(72) Inventors:
• **WESTERHOF, Nicolaas Jan**
  **1823 CJ Alkmaar (NL)**
• **SCHOUTEN, Simon Johannes**
  **1823 CJ Alkmaar (NL)**

(74) Representative: **D Young & Co LLP**
**3 Noble Street**
**London EC2V 7BQ (GB)**

(54) **AN APPARATUS, METHOD AND COMPUTER PROGRAM FOR VALIDATION OF TRACKING DATA FROM A DATA PROVIDER**

(57)  In accordance with the present disclosure, an apparatus for validation of tracking data from a data provider is provided, the apparatus comprising circuitry configured to: receive a first sample of tracking data from a data provider, the first sample of tracking data comprising information related to the location of at least one person within a physical environment at a first instance of time; generate information related to one or more features of the at least one person using the sample of tracking data; perform error detection using the information related to the one or more features of the at least one person which has been generated and one or more constraints on features of a person in the physical environment; and validate the first sample of tracking data in accordance with a result of the error detection.

FIG. 3

Description

BACKGROUND

Field of the Disclosure

The present invention relates to an apparatus, method and computer program for validation of tracking data from a data provider.

Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Motion tracking data can be acquired to track the movement of an object. There are many different ways by which such motion tracking data (or tracking data) can be obtained. For example, tracking data can be obtained using a tracking device (such as a sensor) attached to an object. Such a sensor can include an inertial measurement unit (IMU) sensor, for example. Alternatively, tracking data can be obtained from captured image data.

There are also many different types of tracking data.

As an example, tracking data can include single point tracking data (where only a single point for an object is tracked). Alternatively, tracking data can include multiple points of tracking data for a single object.

It is often desired to be able to use tracking data of an object which has been obtained for subsequent processing or visualization tasks. However, errors in the tracking data can limit the accuracy and reliability of the subsequent processing or visualization tasks.

It is an aim of the present disclosure to address these issues.

SUMMARY:

Embodiments of the present disclosure are defined by the appended claims. Further aspects of the present disclosure are defined by the dependent claims.

In accordance with embodiments of the disclosure, tracking data from tracking providers can be validated. Thus, confidence in the tracking data can be increased, while the accuracy and reliability of subsequent processing or visualization tasks performed using the tracking data can be improved.

The present disclosure is not particularly limited to these technical effects. Other technical effects will become apparent to the skilled person when reading the disclosure.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Figure 1 illustrates an apparatus in accordance with embodiments of the disclosure;

Figure 2 illustrates an example situation to which embodiments of the disclosure can be applied;

Figure 3 illustrates an apparatus in accordance with embodiments of the disclosure;

Figure 4 illustrates an example process performed by an apparatus in accordance with embodiments of the disclosure;

Figure 5 illustrates an example of generating information related to features of a person in accordance with embodiments of the disclosure;

Figure 6A illustrates an example of error detection in accordance with embodiments of the disclosure;

Figure 6B illustrates an example of error detection in accordance with embodiments of the disclosure;

Figure 6C illustrates an example of error detection in accordance with embodiments of the disclosure;

Figure 7 illustrates an example of a validation report in accordance with embodiments of the disclosure;

Figure 8 illustrates an example of a validation report in accordance with embodiments of the disclosure;

Figure 9A illustrates an example data enhancement in accordance with embodiments of the disclosure;

Figure 9B illustrates an example data enhancement in accordance with embodiments of the disclosure;

Figure 10 illustrates an example process performed by an apparatus in accordance with embodiments of the disclosure;

Figure 11 illustrates an example data enhancement in accordance with embodiments of the disclosure.

## DESCRIPTION OF THE EMBODIMENTS

Referring now to the drawings, wherein like reference numerals designate identical or corresponding parts throughout the several views.

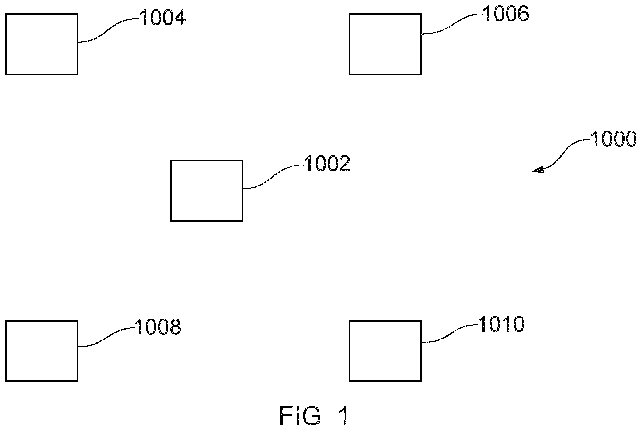

Referring to Figure 1, an apparatus 1000 according to embodiments of the disclosure is shown. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1002. In some examples, the apparatus 1000 may be a portable computing device such as a mobile phone, laptop computer or tablet computing device.

The processing circuitry 1002 may be a microprocessor carrying out computer instructions or may be an Application Specific Integrated Circuit. The computer instructions are stored on storage medium 1004 which maybe a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally, an optional user input device 1006 is shown connected to the processing circuitry 1002. The user input device 1006 may be a touch screen or may be a mouse or stylist type input device. The user input device 1006 may also be a keyboard or any combination of these devices.

A network connection 1008 may optionally be coupled to the processor circuitry 1002. The network connection 1008 may be a connection to a Local Area Network or a Wide Area Network such as the Internet or a Virtual Private Network or the like. The network connection 1008 may be connected to a server allowing the processor circuitry 1002 to communicate with another apparatus in order to obtain or provide relevant data. The network connection 1002 may be behind a firewall or some other form of network security.

Additionally, shown coupled to the processing circuitry 1002, is a display device 1010. The display device 1010, although shown integrated into the apparatus 1000, may additionally be separate to the apparatus 1000 and may be a monitor or some kind of device allowing the user to visualise the operation of the system. In addition, the display device 1010 may be a printer, projector or some other device allowing relevant information generated by the apparatus 1000 to be viewed by the user or by a third party.

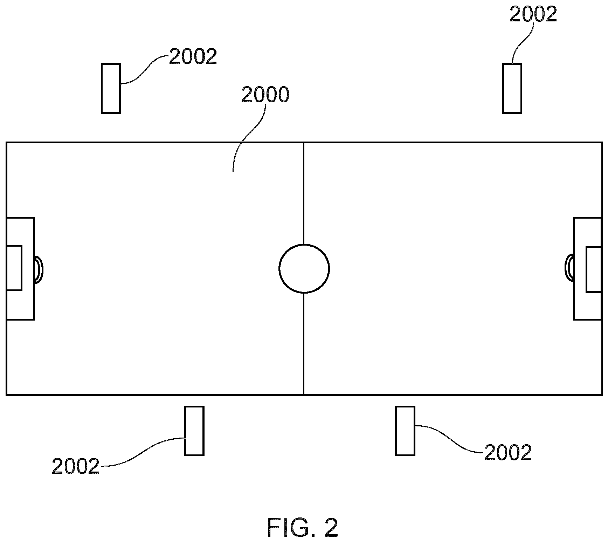

Consider, now, Figure 2 of the present disclosure. Figure 2 illustrates an example situation to which embodiments of the disclosure can be applied. Specifically, Figure 2 illustrates a sporting event (or sporting environment). In examples, the sporting event may optionally include either ice-hockey, soccer (football), tennis, rugby, America football or basketball. Of course, embodiments of the disclosure may also be applied to other sporting events and/or other environments other than sporting events. Indeed, more generally, embodiments of the disclosure may be applied to any situation whereby validation of tracking data from a data provider is required.

In this specific example, the situation illustrated in Figure 2 is a soccer match. The soccer pitch 2000 is surrounded by a number of imaging device 2002. The imaging devices 2002 are configured to capture images of the soccer match played on the soccer pitch 2000.

A number of players (not shown) play the soccer match on the soccer pitch. These players form two teams, with each team trying to score by kicking a ball (not shown) into the opponent's goal.

In this example, the imaging devices 2002 belong to a data provider. The data provider captures data using the imaging devices 2002 and provides that data to another entity. Specifically, in this example, the data provider uses the images captured by the imaging devices 2002 arranged around the soccer pitch in order to produce motion tracking data (tracking data) of the players on the pitch. The data provider may be independent from a person or entity who subsequently uses the data provided by the data provider (i.e. an external or third party data provider).

While the tracking data, in this example, is captured by the data provider using a number of imaging devices 2002, the present disclosure is not particularly limited in this regard. In examples, the data provider may capture the tracking data in a different way. Indeed, there are many different ways by which such motion tracking data (or tracking data) can be obtained. For example, tracking data can be obtained using a tracking device (such as a sensor) attached to an object. In the present disclosure, an object can be any entity which is a target of the tracking device. In examples, the object can be a person (such as a player or a referee). In examples, the object can be a ball (in a soccer match), a puck (in ice-hockey), or the like. Therefore, any entity which is the target of the tracking device is an object within the present disclosure.

Tracking data provided by the data provider can be used in a number of different ways. For example, the tracking data may be used in order to analyse data related to the performance of a player during or after the soccer match (e.g. a post-match report). Alternatively, tracking data may be used to assist in making a critical decision during the soccer match (e.g. a decision on whether or not a player was in violation of a rule of the game). Alternatively, tracking data may be used to provide visualizations (such as virtual simulations) of the soccer match.

As such, it is often desired to be able to use tracking data of an object which has been obtained by a data provider for subsequent processing or visualization tasks. However, errors in the tracking data can limit the accuracy and reliability of the subsequent processing or visualization tasks.

This can be exacerbated when using or combining data from a number of different data providers. For example, when data is received from an independent third party data provider or a number of different data providers, it can be very difficult to ensure that the tracking data is reliable and free from errors. Therefore, it can be very difficult to ensure the reliability and accuracy of subsequent processing or visualization tasks using the tracking data.

Thus, in accordance with embodiments of the disclosure, an apparatus, method and computer program for validation of tracking data from a data provider is provided.

<Apparatus>

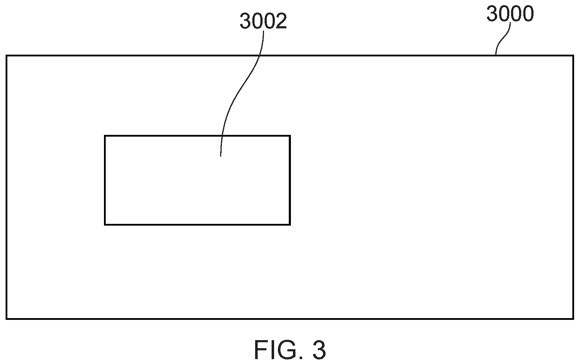

Figure 3 illustrates an apparatus 3000 for validation of tracking data from a data provider in accordance with embodiments of the disclosure. The apparatus 3000 comprises circuitry 3002.

The circuitry 3002 is configured to receive a first sample of tracking data from a data provider, the first sample of tracking data comprising information related to the location of at least one person within a physical environment at a first instance of time.

Furthermore, the circuitry 3002 is configured to generate information related to one or more features of the at least one person using the sample of tracking data.

The circuitry 3002 is also configured to perform error detection using the information related to the one or more features of the at least one person which has been generated and one or more constraints on features of a person in the physical environment.

Finally, the circuitry 3002 is configured to validate the first sample of tracking data in accordance with a result of the error detection.

In this way, validation of the tracking data from data providers can be performed. Thus, confidence in the tracking data can be increased, while the accuracy and reliability of subsequent processing or visualization tasks performed using the tracking data can be improved.

While described with reference to a first sample of tracking data, it will be appreciated that embodiments of the disclosure may more generally be applied to a multi-frame environment (described in more detail below). In examples, the processing applied to the second sample of tracking data may be the same as applied to the first sample of tracking data. In examples, the processing applied to the second sample of tracking data (and indeed, other subsequent samples of tracking data) may depend upon the processing and/or an output of the processing which has been applied to the first sample of tracking data (or other samples of tracking data processed before the current sample). For example, multiple samples of tracking data may be analysed in order to determine consistency between the output. Alternatively, computing assumptions from preceding samples may be applied to later samples of the tracking data in order to further improve computational efficiency.

In some examples, the apparatus 3000 may be implemented as part of the apparatus 1000 described with reference to Figure 1. For example, the circuitry 3002 may be implemented as processing circuitry 1002 described with reference to Figure 1 of the present disclosure. However, the present disclosure is not particularly limited in this respect. Furthermore, while described as single circuitry, in examples circuitry 3002 may be implemented as a number of separate circuits. Furthermore, in examples, the circuitry 3002 may carry out computer instructions stored in a non-transitory computer readable medium. These computer instructions may, optionally, be programmed as a plurality of plugins. That is, each validation part (e.g. receiving the sample of tracking data, generating the information related to the features, performing error detection and/or validation) may be performed by one or more independent plugins. This may improve the efficiency and flexibility of the computer instructions when implemented by a computing device (e.g. apparatus 3000).

Further details of embodiments of the disclosure will now be provided.

<Receiving Tracking Data>

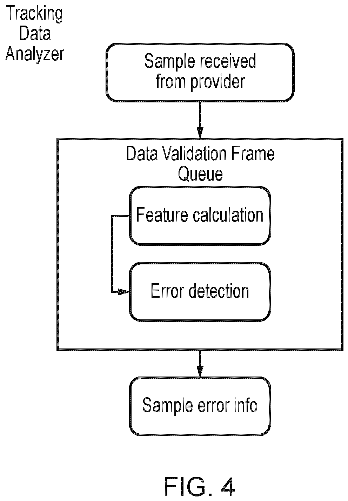

Consider, now, Figure 4 of the present disclosure. Figure 4 illustrates an example process performed by an apparatus in accordance with embodiments of the disclosure. That is, the example process of Figure 4 is an example implementation of the process performed by apparatus 3000 in accordance with embodiments of the disclosure.

In this example, a sample of tracking data (motion tracking data) is received from a provider. In this example, the tracking data is tracking data related to a sporting event (such as that illustrated with reference to Figure 2 of the present disclosure). Accordingly, the tracking data may relate to the position of a player (or group of players) on the soccer pitch. Each sample of the tracking data relates to the position of the player (or group of players) at a given instance of time. Therefore, a series of samples of tracking data describe the movement (change of position) of the player (or group of players) over time. In examples, a sample of tracking data is a frame of tracking data describing the position of the player (or more generally, the tracking object or objects) at a given instance of time.

Furthermore, in examples, the tracking data may relate to the position (or location) of multiple different body parts of the person within the physical environment. For example, tracking data of different body parts of the person (e.g. the arms of the person or the legs of the person) may be provided. In some examples, many different points on the person may be tracked independently.

The way in which the data is received is not particularly limited and may vary depending on the situation to which embodiments of the disclosure are applied. In some examples, the data may be received using a network such as the internet. However, more generally, data may be received from the data provider using any suitable wired or wireless data connection.

The following description of Figure 4 of the present disclosure will, in examples, be made with reference to tracking data relating to the position of a single player in the sporting event. However, it will be appreciated that embodiments of the disclosure may also be applied in the event that the tracking data relates to the position of more than one player (i.e. a group of players). This will be described in more detail later.

The data provider collects the data which is then received by apparatus 3000. The data provider may be an independent entity (i.e. external to a downstream entity who uses the tracking data which has been provided). There are many different ways by which such tracking data can be obtained by the data provider. For example, tracking data can be obtained using a tracking device (such as a sensor) attached to an object. Such a sensor can include an inertial measurement unit (IMU) sensor, for example. Alternatively, tracking data can be obtained from captured image data of the object being tracked (here, the player).

Furthermore, there are many different types of tracking data.

As an example, tracking data can include single point tracking data (where only a single point for an object is tracked). Alternatively, tracking data can include multiple points of tracking data for a single object.

Indeed, the type of tracking data and the format of the tracking data received from the data provider is not particularly limited in accordance with embodiments of the disclosure. In some examples, tracking data from many different types of data provider may be received. Alternatively, the type of data which is provided and/or the format of that data may vary depending on the type of event the tracking data relates to.

The samples of tracking data may be received in a stream from the data provider. In examples, the stream of tracking data from the data provider may be received in substantially real time as the sporting event progresses.

In some examples, each sample of tracking data may be processed as it is received from the data provider. In some examples, a sample or samples of tracking data may be stored in a data validation sample queue before processing. For example, a sample or samples of tracking data may be held in a storage device such as storage medium 1004 before processing. In some examples, whenever a new sample enters the queue, an index may be assigned to that sample. Then, subsequent processing may be performed on that sample in accordance with the assigned index of that sample, when the sample reaches the front of the data validation queue.

The use of a data validation queue enables validation of the tracking data to be performed with reference to one or more other samples of the tracking data. Furthermore, it enables the storage medium 1004 to act as a buffer to hold a sample or samples of tracking data when received before data validation is performed on that sample or samples of tracking data. In examples, the buffer may hold samples received from the data provider until a predetermined number of samples have been received.

Thus, the queue (i.e. the data validation sample queue) may be populated with samples to be validated from the data provider. Furthermore, samples may be extracted from the queue when they are to be validated (by the circuitry of apparatus 3000, for example).

Therefore, in embodiments of the disclosure, the circuitry 3002 is configured to receive a first sample of tracking data from a data provider, the first sample of tracking data comprising information related to the location of at least one person within a physical environment at a first instance of time.

As previously explained, location of the at least one person includes the pose and/or position of the different body parts of the person.

As explained, the type of tracking data and/or the format of tracking data received from the data provider is not particularly limited. However, errors in the tracking data can limit the accuracy and reliability of the subsequent processing or visualization tasks which are performed using the tracking data. Therefore, embodiments of the disclosure perform a process of data validation in order to identify data errors in the tracking data received from the data provider. This enables a number of different actions to be taken in accordance with the identification of the data errors. For example, errors in the tracking data may be reported to the data provider. Alternatively, errors in the tracking data received from the data provider may be corrected. Alternatively, erroneous portions of the tracking data received from the data provider may be identified as invalid and removed from further processing.

<Feature Generation>

In embodiments of the disclosure the data received from the data provider (once extracted from the data validation sample queue) may be normalised by the circuitry 3002 of apparatus 3000 in order that it in a standard form. This enables the errors in the tracking data to be more reliably and efficiently identified.

Thus, a feature calculation process is performed on the data received from the data provider (once extracted from the data validation sample queue. This enables information related to features of the person to be generated (thus placing the data in a standard form).

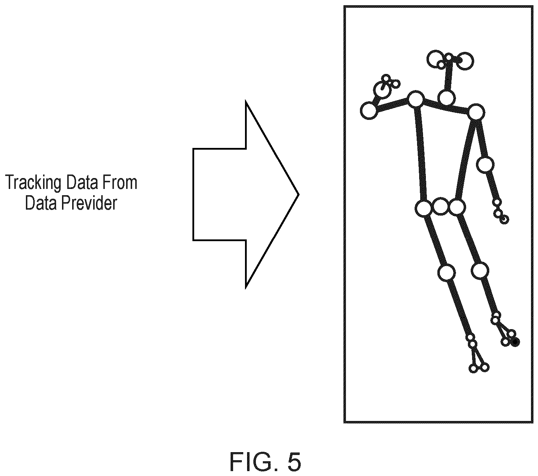

Consider, now, Figure 5 of the present disclosure. Figure 5 of the present disclosure illustrates an example of generating information related to features of a person in accordance with embodiments of the disclosure.

On the left-hand side of Figure 5 of the present disclosure, tracking data is received from the data provider (or extracted from the data validation sample queue).

Then, a feature calculation process is performed on the data in order to extract one or more features of the player from the tracking data. For example, the tracking data may be used in order to generate a 3D model (such as a skeletal model of the player). An example of a skeletal model of a player generated from the tracking data provided by the data provider is shown on the right-hand side of Figure 5.

By generating information related to features of the person (such as the skeletal model) from the tracking data in this way, the tracking data can be converted to a standard form. For example, the circuitry 3002 may generate a skeletal model of the person from the tracking data independently of the type of the tracking data. The skeletal model (or more generally, the information related to the features of the person) can then be used in order to more efficiently and reliably identify errors within the tracking data.

In examples, one or more algorithms known in the art may be used in order to generate the skeletal model of the player from the tracking data. The type of algorithm used in order to generate the skeletal model of the player may depend on the type of tracking data received. Alternatively, in some examples, a trained model may be used in order to generate the skeletal model of the player from the tracking data.

The trained model may, for example, include a machine learning model. In examples, the machine learning model may be a deep learning model. The trained model may be trained in order extract one or more features of the player from the tracking data. For example, the trained model may be trained to generate a skeletal model of the player from the tracking data. However, the trained model may not necessarily be trained to generate a skeletal model of the player. Alternatively, the trained model may generate only one or more specific features of the player from the tracking data. The one or more features of the player may include, for example, the position of a player's arm, the position of a player's leg, the position of a player's head or the like.

Training of the trained model will now be described.

The machine learning model can be trained using either supervised learning or unsupervised learning. In some examples, the machine learning model may, specifically, be a deep learning model which utilizes neural networks.

In supervised learning, labelled data is provided to the machine learning model. That is, data is provided as both an input and a corresponding output. The machine learning model is then trained on this labelled data such that it can be used to predict the output for previously unseen input data.

As a specific example, training a model to generate one or more features of the player from the tracking data may include providing the model with labelled tracking data (i.e. tracking data with corresponding information identifying the features of the player in that tracking data). Training may be performed on historical data (received from tracking data), simulated tracking data or specific training data (e.g. training data generated by tracking movements of a person specifically for training of the trained model).

The training data thus includes as input the tracking data of the player. This can be from a single type of data provider or from a combination of different data providers. The training data includes as output the feature of the player. In examples, many different types of tracking data and many different combinations of tracking data (i.e. tracking data from different data providers) may be provided in the training data. This can further improve accuracy and reliability of the trained model when generating the feature of a player from the tracking data.

The training data is not limited to this specific example of training data and different inputs and outputs can be provided in the training data depending on the situation to which the embodiments of the disclosure are to be applied.

The training data, once acquired, is then split into two data sets. These data sets include a training data set and a test data set.

The model (such as a machine learning model) is then trained using the training data set portion of the training data. This enables the model to learn a correspondence between the inputs (i.e. tracking data) and the output (i.e. the feature of the player (such as the skeletal model of the player)).

Once trained on the training data set portion of the training data, the performance of the trained model can then be evaluated. That is, the trained model is provided with the (previously unseen) inputs from the test data set and predicts the outputs from these inputs (i.e. a feature (or features) of the player). The output predicted by the trained model can then be compared with the (previously unseen) output from the test data set in order to evaluate the performance of the trained model. Additional training with additional training data (of the same form described above) can then be performed, if required, until satisfactory performance of the trained model on the test data is achieved (i.e. a model which reliably generates information related to the person from the input data (the tracking data) within a predetermined threshold level).

The present disclosure is not particularly limited to the use of supervised learning when training the trained model. Instead, unsupervised learning can be used to train the trained model. Here, the same training data is provided to the model (e.g. a machine learning model) but the data are not labelled. Instead, the model analyses the data in order to discover patterns in the data to discover the innate structure of the data. This enables the model to learn for any given inputs (that is, the training data) what corresponding function should be activated.

In this way, a trained model can be acquired which can then be used to generate the feature of the player from the tracking data.

Furthermore, in examples, self-supervised learning can be used when training the model. Self-supervised learning can be considered as a sub-set of unsupervised learning. In self-supervised learning, the model is trained on unlabelled data (similar to the case for the unsupervised learning model). However, with self-supervised learning, the model generates the labels which can be used for training (e.g. during a pre-leaning stage). Accordingly, when using a self-supervised learning approach to train the model, the training does not rely on external labels being provided (e.g. by a human).

While the example of Figure 5 of the present disclosure has been described with reference to a situation where a skeletal model is generated from the tracking data, it will be appreciated that the present disclosure is not particularly limited in this regard. More generally, one or more features of the player may be generated from the tracking data (e.g. the position of a player's arm, the position of a player's leg, the position of a player's head or the like). Furthermore, while the example of Figure 5 has been described with use of a trained model for generating the feature of the player from the tracking data, the present disclosure is not particularly limited in this regard. More generally, any suitable algorithm known in the art can be used to generate the feature of the user from the tracking data which has been received. Furthermore, while the example of Figure 5 has been described with reference to a single player, the present disclosure is not particularly limited in this regard. In some examples, the tracking data received may include tracking data for more than one player. In these examples, the circuitry 3002 may generate information related to the different players in the tracking data independently. For example, a different skeletal model (or other suitable information) may be generated for each player within the tracking data.

Therefore, in embodiments of the disclosure, the circuitry 3002 may generate information related to one or more features of the at least one person, using the sample (or samples) of tracking data.

<Error Detection>

Returning, now, to Figure 4 of the present disclosure, it will be appreciated that once the feature calculation has been performed (i.e. once the information related to the features of the person has been generated) a process of error detection can be performed.

In embodiments of the disclosure, the error detection is performed using the information related to the one or more features of the at least one person which has been generated and one or more constraints on features of a person in the physical environment.

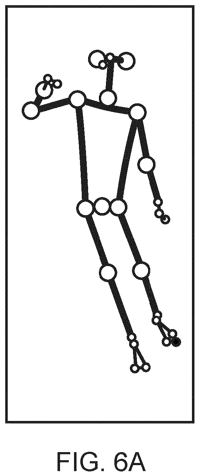

Consider, now, Figures 6A to 6C of the present disclosure. These Figures each illustrate an example of error detection in accordance with embodiments of the disclosure.

In this example, information related to one or more features of at least one person (player) has been generated by the circuitry 3002. Specifically, in this example, the information is a skeletal model of the person. In embodiments of the disclosure, this information is then analysed in order to identify errors in the tracking data. The information is analysed dependent upon (or using) one or more constraints on features of the person in the physical environment. That is, the constrains on features of the person may be a predetermined set of rules relating to a physical limitation on a feature of the person in the real world. As an example, when the feature of the person relates to the arm of the person, the constraint may define a limitation on the length of the person's arm. Alternatively, the constraint may define a limitation on a relative length of the person's arm (e.g. in relation to their height). Alternatively, the constraint may define a limitation on the movement of the person's arm (e.g. that the arm cannot move through a certain range of motion (such as through the body of the person).

By analysing the at least one features of the person which have been generated using the constraints, unnatural features (arising from errors in the tracking data) can be identified.

For example, in Figure 6A, the skeletal model of the person generated from the tracking data (for that sample of tracking data) has been analysed. However, no errors in the tracking data have been identified, as the skeletal model fully conforms to the constraints.

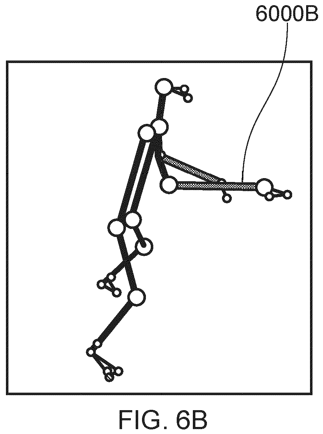

However, in contrast, an error 6000B in tracking data has been identified in the example of Figure 6B. In this example, the length of the person's forearm in the skeletal model generated from the tracking data exceeds the constraint on arm length relative to the person's body (such as the leg length, for example). That is, a unnatural feature has been identified in the skeletal model generated from the tracking data. This unnatural feature is an unnaturally long arm, which is longer than the actual length of the arm the person can realistically be expected to have. Therefore, an error in the tracking data can be identified. This error can be attributed to the entire sample of tracking data related to the person. Alternatively, this error can be attributed to the portion of the tracking data corresponding to the arm of the person.

In examples, an average limb length for the person can be computed from the first X samples of tracking data, where X is any number more than 1. The accuracy of the computation of the average limb length for the person increases as the number of samples of tracking data increases. In examples, at least 100 samples of tracking data may be used in order to compute the average limb length for the person. In examples, at least 1000 samples of tracking data may be used in order to compute the average limb length for the person. However, the present disclosure is not particularly limited in this regard and any suitable number of samples may be used in the computation of the average limb length of the person.

Once calculated, the average limb length is assumed to be the 'true' length of that person's limb.

When a new sample of tracking data is received, the new length of the person's limb (computed from that new sample) can be compared to the computed mean.

In examples, the deviation between the new length and the computed mean can be compared to a threshold defined in centimetres (absolute deviation). Then, if the deviation exceeds the threshold, an error in the length of the limb (from the new sample of tracking data) can be identified.

In examples, the deviation between the new length and the computed mean can be calculated as a percentage of the mean value:

$$\frac{deviation}{computed\ mean} \ x\ 100$$

(relative deviation) and compared it to a threshold that is also defined as a percentage. Then, if the deviation exceeds the threshold, an error in the length of the limb (from the new sample of tracking data) can be identified.

An absolute deviation on an arm typically has more impact visually than that same absolute deviation would on a leg, because the arm is shorter. As such, the relative deviation can provide a more realistic identification of errors within the tracking data.

As an example, for refereeing, the absolute deviation might be important to be sure (i.e. provide increased confidence) about the call.

While described with reference to a single limb of a single person, it will be appreciated that a similar calculation can be performed on a person by person (and limb by limb) basis in order to identify errors in the tracking data which has been received.

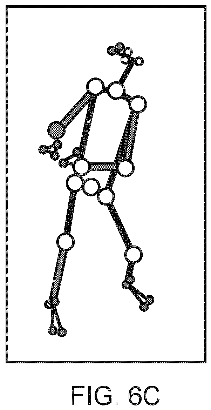

Figure 6C provides a further example where an error has been detected using the information related to the one or more features of the at least one person which has been generated and one or more constraints on features of a person in the physical environment. In this example, the limbs of the person in the skeletal model which has been generated from the tracking data form an unnatural pose (being a pose which cannot realistically be performed by a person). Therefore, an error in the tracking data can be identified.

In examples, the constraints on the features of a person in the physical environment include constraints on a limb length of a person, a posture of a person and/or an action of a person. The action of the person may be related to the environment in which the person is located. For example, the action of the person may be constrained in accordance with a type of sporting event the person is participating in. In soccer, for example, a person may be expected to perform an action such as running after the football. In ice-hockey, however, they perform an action such as skating on the ice-rink. These different actions may have different constraints on the feature of the person and can be used in order to identify an error in the tracking data (e.g. an action which would not be expected for the current sporting event).

Of course, it will be appreciated that the present disclosure is not particularly limited to these example constraints. Any suitable constraints may be used in order to identify errors in the tracking data as appropriate depending on the situation to which the embodiments of the disclosure are applied.

In examples, the constraints on the features of the person may include a 3D model of a person in the physical environment. That is, a comparative or "realistic" model of the person may be provided as a constraint. Then, the features of the person which have been generated (such as the skeletal models of Figures 6A to 6C) may be compared against this "realistic" model of the person. Differences between the "realistic" model of a person and the information which has been generated from the tracking data may then be used in order to identify errors in the tracking data. In some examples, a specific "realistic" model may be provided depending on the person being tracked in the tracking data.

The constraints on the features of the person in the physical environment may be defined in advance and stored in a storage unit or the like accessible by circuitry 3002. In examples, error detection may be performed by a comparison of the features of the person with the constraints (e.g. is the information generated from the tracking data realistic or not).

In some examples, error detection may be performed by circuitry 3002 using a trained model. The trained model may be a trained model as described for generation of the features of the person from the tracking data. For example, the trained model may be a machine learning model such as a neural network.

In this case, the trained model may be trained on training data including features of a person (such as skeletal models) which have been labelled with unnatural or unrealistic features. The trained model may then be trained in order to identify the unnatural or unrealistic features in further unseen data sets. The training data may include historical or simulated training data (such as training data simulating different types of errors which may occur).

Accordingly, the trained model can thus be used to identify unnatural or unrealistic features in the features of the person generated from the tracking data; thus, the trained model can be used in order to identify errors in the tracking data.

Other types of error in the tracking data can also be identified when a plurality of samples of tracking data are considered together. That is, analysis of multiple samples of tracking data enables additional errors such as missing samples of tracking data or the like to be detected. This will be described in more detail later.

While the examples of Figures 6A to 6C have been described with reference to an example situation of a skeletal model generated from the tracking data, it will be appreciated that the present disclosure is not particularly limited in this regard. Any information related to the feature of the person generated from the tracking data can be used to identify errors in the tracking data when compared with one or more predetermined constraints. Therefore, the skeletal model of the person illustrated in Figures 6A to 6C describes one example way in which said error detection can be performed. The present disclosure is not particularly limited in this regard.

Nevertheless, it will be appreciated that as error detection is performed on normalized or standardised data (i.e. the information related to the features of the person which has been generated from the tracking data) it becomes easier to identify errors in the tracking data even when tracking data is received from a number of different data providers and/or in different data formats. That is limitations or constraints on the features of a person extracted from the tracking data can be used in order to detect errors in the tracking data, even when errors in the tracking data itself are otherwise more difficult to determine.

Thus, in embodiments of the disclosure, error detection is performed using the information related to the one or more features of the at least one person which has been generated and one or more constraints on features of a person in the physical environment.

<Data Validation>

Once the errors in the tracking data have been identified, data validation may be performed.

In some examples, the validation process may include identifying a sample as valid or invalid dependent upon the errors which have been detected. For example, samples of tracking data for which errors have been detected may be identified as invalid and removed from use in further processing or visualization tasks. A sample of tracking data which has been validated can be confidently used in further processing or visualization tasks as the sample of tracking data has been checked for errors. Thus, in some examples, validation can comprise a process of removing samples of tracking data for which one or more errors have been identified in order to produce a second stream (resultant stream) of valid data (i.e. samples of tracking data free from errors). This resultant stream of valid data can then be used in further processing or visualization tasks (e.g. such as for use in generating a virtual simulation of the sporting event).

In some examples, once the errors have been detected, sample error information may be produced for each of the samples of data from the data validation sample queue which have been processed. This is an example of data validation of the samples of tracking data which have been provided and is illustrated in Figure 4 of the present disclosure. The sample error information may be produced as meta data associated with each sample of tracking data. Alternatively, the sample error information may be generated and stored independently from the samples of tracking data.

In some examples, sample error information may be produced only for samples in which one or more errors have been detected. In other examples, sample error information may be produced for all samples, with the sample error information containing information concerning any errors which have been detected.

Thus, in examples, validation of the tracking data includes identification of an invalid aspect of the tracking data. In examples, an invalid aspect of the tracking data can include an invalid sample of the tracking data or an invalid portion of a sample of tracking data.

Consider, again, the example of Figures 6A to 6C of the present disclosure. No errors were detected in relation to Figure 6A of the present disclosure. Therefore, the validation process may include validating the tracking data corresponding to Figure 6A, in order that it can be used in further processing or visualisation tasks. That is, because no errors were detected, the tracking data related to Figure 6A can be used in any further processing or visualisation tasks without concern that errors in the tracking data will propagate to subsequent processing or visualization tasks.

However, an error was detected for Figure 6B. In particular, the limb length of the person generated using the tracking data was determined to be unrealistic. Therefore, an error is present in the tracking data causing the unrealistic limb length of the person. The validation process may then include generating sample error information for the sample of tracking data corresponding to Figure 6B. In examples, the sample error information may include information indicating the type of error which has been detected (e.g. a limb length error, a posture error, a movement error or the like).

In examples, the validation process may include identifying any sample for which an error was detected as an invalid sample of tracking data. This invalid sample of tracking data may then not be used in further processing or visualisation tasks. However, in other examples, the validation process may include identifying a sample of tracking data as an invalid sample of tracking data only when a certain type of error has been detected. For example, certain types of error in the tracking data may be easily corrected once detected. Alternatively, certain types of error may have limited impact on further processing or visualization tasks.

As an example, in some examples, an error in the length of a person's arm may be considered a small error which will not affect further processing or visualization tasks. On the other hand, an error in the length of a person's leg may have a greater impact on further processing or visualization tasks. As such, certain samples of tracking data may still be validated for use in further processing or visualization tasks even if an error has been detected, provided that the error which has been detected is not relevant for the further processing or visualization task which is to be performed.

The types of error which require a sample to be identified as an invalid sample of the data may depend upon the situation to which the embodiments of the disclosure are applied. As an example, a further processing task which requires analysis as to whether or not a sporting rule has been violated may demand use only of data samples for which no error has been detected. On the other hand, a visualization task used to generate a virtual simulation of the sporting event from the tracking data may enable samples of tracking data to be used provided that the number of errors in the tracking data are below a threshold level.

Thus, in the example of Figure 6B, sample error information may be produced detailing that an error in the length of the person's arm has been identified. However, the sample may still be validated for further processing or visualization (or certain types of further processing or visualization tasks).

Moreover, because the information related to the type of error which has been identified is generated (i.e. the sample error information) it becomes easy for a subsequent user of the data to understand the error in the tracking data which has been provided. Therefore, the subsequent user of the data can have confidence in using the sample of tracking data which has been identified.

In other examples, the number of errors which have been identified or the type of errors which have been identified may be such that the sample of tracking data should not be used in further processing or visualization tasks. In such a situation, the validation process may include invalidating a sample of tracking data in order that it is not used in further processing or visualization tasks. Indeed, as samples of data such as these are invalidated and removed from use in further processing or visualization tasks, the accuracy and reliability of further processing or visualization tasks which use the tracking data can be improved.

Furthermore, even for samples of tracking data which are invalidated, sample error information may still be generated. This enables a person to understand why the sample of tracking data has been invalidated.

In some examples, the validation process may further include production of a validation report in addition to the sample error information which has been described. The validation report may contain information regarding errors which have been detected in a stream of tracking data (i.e. in a number of different samples received from a data provider). In some examples, the validation report may be produced once the error detection process has been performed for all samples in the data stream. In other examples, the validation report may be produced and updated as the samples in the data stream are processed.

In examples, the validation report can be used by a user/operator in order to override an error which has been detected during the validation process. In examples, this may be performed by a user/operator in a post-match analysis of the data validation process (e.g. as part of a manual review). For example, a user/operator may be able to review the validation report which has been produced with the samples of tracking data. If the user/operator identifies that a portion of the tracking data has been incorrectly flagged as an error during the validation process, the user/operator may then override the validation process and change the validation status for that portion of the tracking data (e.g. the user/operator may change the validation status from an error to a clear (no error) portion of the tracking data). The user/operator may perform the manual review on a display device. Furthermore, the user/operator may perform input using a user input device such as the user input device 1006 described with reference to Figure 1 of the present disclosure. In examples, the user/operator may perform the review and provide input using a user interface such as a Graphical User Interface. Once the manual review has been performed, the revised tracking data may be used for subsequent retraining of the error detection models. This can further improve the accuracy and reliability of the validation which is performed during the validation process.

Thus, in examples, the circuitry of the apparatus 3000 may be further configured to receive an input instruction from a user, the input instruction for confirming one or more portions of the validation report.

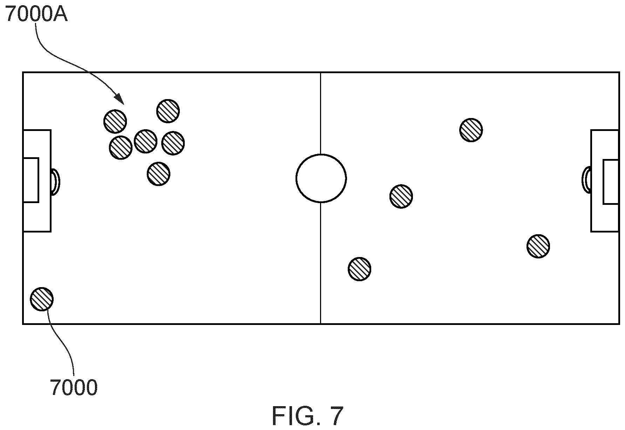

Consider, now, the example of Figure 7. Figure 7 illustrates an example of a validation report in accordance with embodiments of the disclosure.

In this example, the stream of tracking data received from the data provider relate to a soccer match. In particular, the stream of tracking data relates to the soccer match described with reference to Figure 2 of the present disclosure.

In Figure 7, a map of the sporting environment (the soccer pitch) is shown. The tracking data received from the data provider details the motion of the players across the soccer pitch as they are playing the game of soccer. The tracking data in this example originates from an number of image capture devices 2002 arranged around the sporting environment (these image capture devices are not shown in Figure 7).

The samples of tracking data received from the data provider are analysed in accordance with embodiments of the present disclosure for validation.

When a sample of tracking data has been identified as invalid, sample error information for that sample of tracking data is produced. Furthermore, a marker 7000 is placed on the map of the sporting environment in the location in the sporting environment at which this error occurred.

The map illustrated in Figure 7 can be updated each time a sample of tracking data has been identified as invalid or each time an error is identified in the tracking data. Thus, an error map is produced (as an example of a validation report).

Thus, error prone regions within the sporting environment can be identified. For example, in Figure 7, a cluster of errors 7000A is present. This indicates that the tracking data from this region of the sporting environment contains more errors (leading to more samples of the tracking data being identified as invalid).

The validation report, once produced, can be provided to the data provider. This enables the data provided to understand one or more regions which are causing data errors. The data provider may then use the information contained in the validation report in order to further improve the data which is being provided.

As an example, a cluster of errors in a certain region of the sporting environment may indicate that there is poor coverage of that region of the sporting environment from data capture devices (such as the image capture devices 2002). The data provider may then implement an additional image capture device configured to capture images of that region of the sporting environment in order to improve the tracking data for that region.

The validation report is not particularly limited to the example of an error map as illustrated in Figure 7 of the present disclosure. Any suitable validation report may be produced depending on the situation to which embodiments of the disclosure are applied.

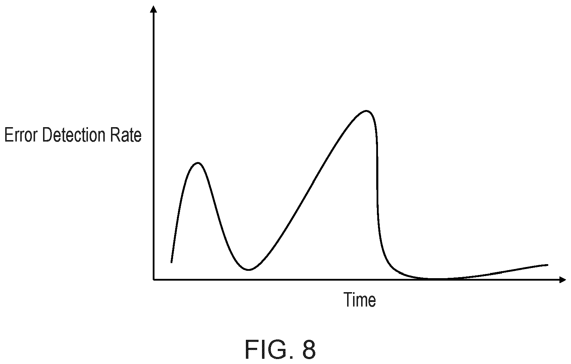

In some examples, the data validation report may include a timeline of the detected errors. Consider now Figure 8 of the present disclosure. Figure 8 of the present disclosure illustrates an example of a validation report in accordance with embodiments of the disclosure. The example of Figure 8 of the present disclosure relates to an example where the data validation report is a timeline of the detected errors.

In this example, the error detection rate (e.g. the number of samples which have an error) can be plotted against time. Therefore, it becomes possible to understand whether there are certain temporal portions of the tracking data which contain more tracking errors.

In the example of Figure 8 of the present disclosure, there are two bursts of errors which have been identified. The remainder of the time, the error detection rate remains low.

By analysing the time at which the errors in the tracking data occurred (e.g. using the timeline of the detected errors) it may be possible to identify one or more events which occurred at the time at which the most errors were detected (e.g. a certain action in the sporting event). The data provider may then use the timeline of the data errors which have been detected in order to further improve the data which is being provided (e.g. by adapting the way in which tracking data is acquired for a certain type of event).

Thus, in embodiments, a validation report may be generated including one or more of: an identification of an invalid aspect of the tracking data, a map of location of detected errors in the physical environment and/or a timeline of detected errors. For example the validation report may include any of the identification of the invalid aspect of the tracking data, the map of location of detected errors in the physical environment or the timeline or detected errors alone (e.g. just the identification of the invalid aspect of the tracking data or just the timeline of detected errors). Alternatively, the validation report may include any combination of these (i.e. any combination of the tracking data, the map of location of detected errors in the physical environment and the timeline of detected errors).

In some examples, the validation process may include performing data correction on a sample of tracking data which has been identified as invalid. The data correction may correct an invalid portion of the tracking data in order that it can be used in subsequent processing or validation tasks. In examples, data correction may be performed with use of a trained model (such as a machine learning model described hereinbefore).

As an example correction of the tracking data may include removal of a portion of the sample of tracking data associated with a data error. The remainder of the sample of tracking data (when the portion associated with the error has been removed) may then be independently validated as a valid sample of tracking data. Alternatively, data correction processing may include correcting (and not specifically removing) the incorrect portion of the tracking data. For example, the tracking data may be adapted in order that the tracking data no longer occurs. For example, when an error in the length of the limb of the person has been identified, the data correction processing may include adapting the tracking data in order that the limb length error no longer occurs.

If the data correction processing successfully corrects the error in the tracking data, the corrected sample of tracking data may be validated for use in subsequent processing and visualization tasks.

Thus, in embodiments of the disclosure, validation processing is performed (e.g. by circuitry 3002 of apparatus 3000) in order to validate the first sample of tracking data in accordance with a result of the error detection.

As previously explained, in some examples a stream of tracking data may be provided by the data provider. In this example, the process of data validation may be performed on a plurality of data samples at the same time. For example, in embodiments of the disclosure, the circuitry is further configured to receive a second sample of tracking data from the data provider, the second sample of tracking data comprising information related to the location of the at least one person within the physical environment at a second instance of time; generate information related to one or more features of the at least one person using the second sample of tracking data; perform error detection using the information related to the one or more features of the at least one person which has been generated from the from the first and second sample and the one or more constraints on features of a person in the physical environment; and validate the first and second sample of tracking data in accordance with a result of the error detection.

In this way, features of the person generated from a plurality of different samples of tracking data (such as a first sample of tracking data and a second sample of tracking data) can be used in order to detect errors in the tracking data provided by the data provider. This may enable additional errors in the data to be detected.

As an example, when multiple samples of tracking data are received and analysed, the constraints used to detect errors in the data from the data provider may also include constraints on the movement of the person between samples of tracking data. For example, the constraints may include constraints on the speed of the person. The speed of the person may also include the speed of individual portions of the person (e.g. the speed at which a person is able to move their arm). If the information related to the feature of the person generated from the tracking data violates one or more of these constraints, an error in the tracking data can be identified.

Furthermore, sudden or unexpected changes in tracking data between samples from the data provider (such as a discontinuity in the position of a player or group of players between samples) may enable errors related to missing samples of tracking data to be identified.

In these examples (when multiple samples of tracking data are received and analysed) an invalid aspect of the tracking data includes invalid identification of a person within the physical environment, invalid data points within the tracking data and/or missing samples of tracking data.

Thus, in embodiments of the disclosure, validation processing is performed (e.g. by circuitry 3002 of apparatus 3000) in order to validate the first and second sample of tracking data in accordance with a result of the error detection. Thus, confidence in the tracking data can be increased, while the accuracy and reliability of subsequent processing or visualization tasks performed using the tracking data can be improved.

<Data Enhancement>

Once the process of data validation has been performed (e.g. as described with reference to Figure 4 of the present disclosure) a process of data enhancement may also be performed. Data enhancement may be provided to enhance the data received from the data provider. That is, the validation process (such as that described with reference to Figure 4 of the present disclosure) is used to validate the data received from the data provider in accordance with errors in the data.

However, even if the data from the data provider does not contain errors, certain processing may still need to be performed in order to enhance the data before that data can be used in subsequent data processing or visualization tasks.

One type of visualization task which may be performed using tracking data from the data provider is to perform a simulation of the tracking data from the data provider. This enables a virtual simulation to be produced. For example, a virtual simulation of the soccer game of Figure 2 may be produced on the basis of the validated tracking data provided by the data provider.

The virtual simulation of the soccer game produced using the validated tracking data may be used in order to enable a person to view the soccer game from a different camera angle than a live broadcast stream captured by imaging devices. The virtual simulation of the soccer game may also enable one or more additional animations or effects to be used in order to augment the action.

Any suitable processing can be performed in order to generate a simulation using the validated tracking data. The present disclosure is not particularly limited in this regard. Furthermore, it will be appreciated that generation of a simulation using the validated tracking data is merely one example of subsequent processing and visualization tasks that can be performed using the validated tracking data from the data provider in accordance with embodiments of the present disclosure.

Nevertheless, as noted above, it will be appreciated that even if the tracking data has been validated (and is thus free from significant data tracking errors), in some examples, certain additional processing may still need to be performed to enhance the data before that data can be used in subsequent data processing or visualization tasks.

Taking the soccer game described with reference to Figure 2 of the present disclosure as an example, the data provider may provide data tracking information related to the players in the sporting environment. However, the data tracking information may not necessarily include data tracking information related to an object such as the football. Therefore, it is necessary to enhance the data which has been provided by the data provider to provide additional information related to the position of the football before that data can be used in subsequent data processing or visualization tasks.

Thus, in examples, enhancing the data may include generating contextual synthetic data using the validated data from the data provider.

More specifically, in examples, a data enhancement process may include a process of interpolation and/or a process of extrapolating the tracking data of the first sample of tracking data to generate information related to one or more features of the at least one object/person.

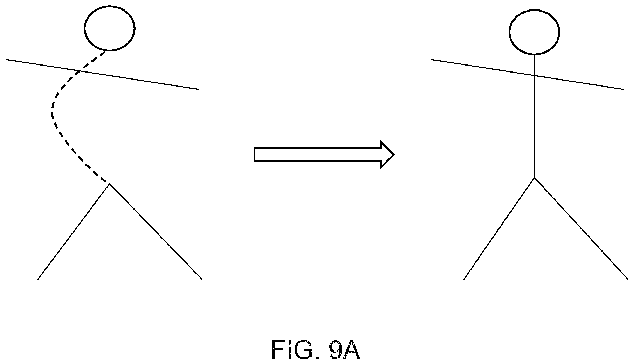

Consider, now, the example of Figure 9A of the present disclosure. Figure 9A illustrates an example data enhancement in accordance with embodiments of the disclosure.

In this example, a data sample received from the data provider may have been validated by the apparatus 3000. That is, apparatus 3000 may identify that there is no error in the tracking data which has been provided by the data provider. However, while the data provided by the tracking data did not contain an error, it may be that the tracking data did not provide information about all parts of the person which are required.

In the left hand side of Figure 9A, a person is shown. The solid lines of Figure 9A show information which can be generated from the tracking data provided by the data provider. In this example, the tracking data from the data provider enables the head, arms and legs of the person to be detected. No errors were detected in this data during the data validation processing.

However, the tracking data from the data provider does not provide any tracking data related to the location of the person's back. Therefore, the location of the person's back is not constrained. Accordingly, as shown by the dotted line in Figure 9A of the present disclosure, a simulation of the person generated from the incomplete data provided by the data provider may produce an unnatural shape of the person's back.

Therefore, in the present disclosure, a data enhancement process is performed on the data received from the data provider in order to interpolate and/or extrapolate the data from the data provider to provide additional data points. In the example of Figure 9A, a data interpolation and/or extrapolation may be performed on the data received from the data provider in order to increase the number of data points between the player's head, arms and legs and thus constrain the position of the person's back. Then, when the enhanced data is used to generate a simulation of the person, a more natural simulation of the person's spine may be produced (as shown in the right-hand side of Figure 9A).

In examples, the data enhancement process may include use of a trained model (which can be trained in the manner as previously described herein). The trained model can be used with the data received from the data provider as input. As output, the trained model will provide one or more additional data points in addition to the data received from the data provider. For example, the trained model may be used in order to increase the number of data points between the player's head, arms and legs and thus constrain the position of the person's back. Then, when the enhanced data is used to generate a simulation of the person, a more natural simulation of the person's spine may be produced (again, as shown in the right-hand side of Figure 9A).

While the example of Figure 9A relates to the situation whereby the data does not provide any tracking data relating to the location of the person's back, it will be appreciated that the present disclosure is not particularly limited in this regard. Indeed, the present disclosure is not particularly limited to an example where the additional data points are generated between existing data points within the tracking data. More generally, the data enhancement process can be used in order to generate additional data points in any location in addition to the data points which have already been provided. For example, the additional data points generated through the enhancement process may extend the data points which have been provided from the data provider. In an example, the data points provided by the data provider may provide data related to the location of the person's limbs. However, they may not provide data related to other body parts of the user (such as the person's fingers or their head). The data enhancement process (such as the trained model) may then generate additional data related to the location of these other body parts of the user. For example, the finger position and/or movement of the person may be predicted based on the body pose of the person (e.g. the location of their limbs). Furthermore, in examples, the data enhancement process may be used in order to generate data points related to a fictional body part (such as a tail).

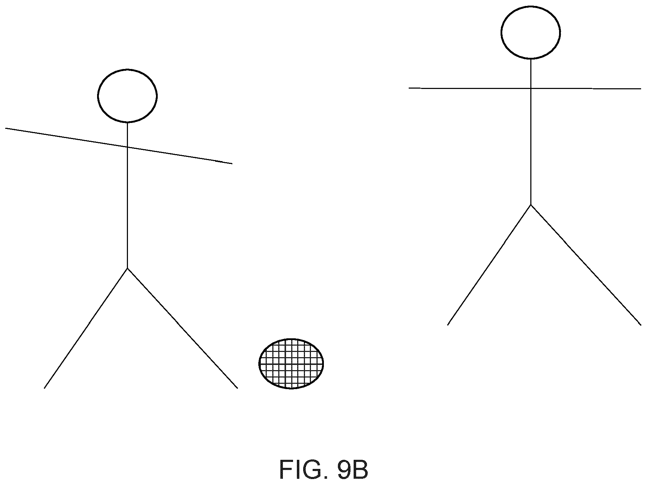

Consider, now, the example of Figure 9B of the present disclosure. Figure 9B illustrates an example of data enhancement in accordance with embodiments of the disclosure.

In this example, a sample of tracking data may have been validated by apparatus 3000. That is, apparatus 3000 may identify that there is no error in the tracking data which has been provided by the data provider. However, while the data provided by the tracking data did not contain an error, it may be that the tracking data did not provide information about all objects that are required in order for a simulation to be produced.

In Figure 9B, two people are shown. The solid lines of Figure 9B show information which can be generated from the tracking data provided by the data provider. In this example, the tracking data from the data provider provided information related to the features of the people. However, the tracking data did not provide information related to the position of the ball. Accordingly, a simulation generated from the incomplete data provided by the data provider may not include a position of the ball.

Therefore, in the present disclosure, a data enhancement process is performed on the data received from the data provider in order to interpolate and/or extrapolate the data from the data provider to provider additional data points (here, relating to the location of the ball). In some examples, the features of the people (e.g. positions of their arms and legs), the actions taken by the people (e.g. whether they are performing an action consistent with kicking the ball) and the orientation of the people in the images (as generated from the tracking data) can be used in order to generate an estimate of the location of the ball in the tracking data or output image. Furthermore, in some examples, one or more additional data sources (such as images of the soccer match from an additional image capture device) may be combined with the data from the data provider in order to further constrain the location of the ball.

In some examples, a position of an additional object can be generated from the tracking data provided by the data provider using a trained model. The trained model may be a model such as a machine learning model described hereinbefore. The trained model may be trained on training data including tracking data from a data provider and a known location of a ball for that tracking data. Then, once trained, the trained model may be used on unseen tracking data from a data provider in order to provide an estimate of the location of the ball.

In examples, additional augmentations exist by combining the body pose from limb tracking data with heuristics. This enables the location of the ball to be estimated.

The enhanced data including the estimated location of the ball may then be used to produce a simulation of the soccer match.

It will be appreciated that while the examples of Figures 9A and 9B have been described with reference to the example of a soccer match, the present disclosure is not particularly limited in this regard. For example, data enhancement processing such as that described with reference to Figures 9A and 9B may also be applied to other situations. As an example data enhancement may also be applied to other sports such as ice-hockey. Here, a process similar to that described with reference to Figure 9B of the present disclosure may be used in order to enhance the data from the data provider by artificial injection of the position of a puck into the data from the data provider (in a situation where the puck was not tracked by the data provider). For example, puck data augmentation can be provided with a heuristic approach based on additional event data input.

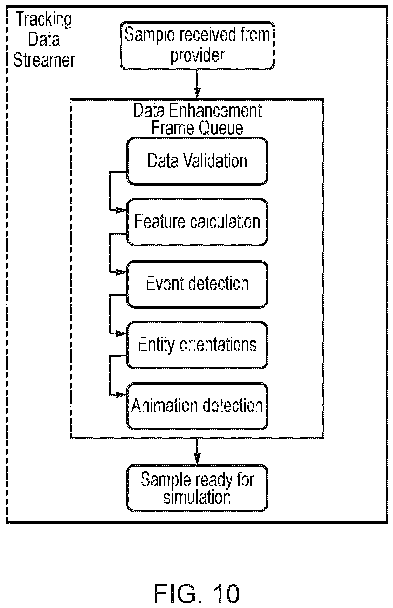

Consider, now, Figure 10 of the present disclosure. Figure 10 illustrates an example process performed by an apparatus in accordance with embodiments of the disclosure. That is, the example process of Figure 4 is an example implementation of the process performed by apparatus 3000 in accordance with embodiments of the disclosure.

More specifically, the example process of Figure 10 is an example of data enhancement process which can be used in order to generate a simulation of the data from the data provider. In this example, the data is enhanced because an appropriate animation can be identified which can be used, with the tracking data from the data provider - to generate a simulation of the event.

The example data enhancement process starts with a step of receiving samples of tracking data from the data provider. This step is the same as described with reference to Figure 4 of the present disclosure. As such, further details of this step will not be provided at this stage for brevity of disclosure.

Then, a process of data validation is performed on the samples of tracking data which are received from the data provider. This is to validate the samples in order to identify any invalid samples of data from the provider which should not be used. The data validation step may be performed in accordance with embodiments of the present disclosure.

Invalid data samples may then be removed from the data enhancement sample queue.

Valid data samples are then passed to the feature calculation step. The feature calculation step may be performed in order to generate information related to one or more features of a person from the validated tracking data. This step is the same as described with reference to Figure 4 of the present disclosure. As such, further details of this step will not be provided at this stage for brevity of the disclosure. Furthermore, it will be appreciated that, in examples, this step may only be performed once for any given sample of tracking data; that is, if a step of feature calculation is performed in the validation of the data from the data provider, the result of that feature calculation may be stored and used in a subsequent step of data enhancement for that sample.

Once the feature calculation step has been performed (or the result of a feature calculation for that sample is retrieved) a process of event detection is performed.

The event detection processing (which may be performed by circuitry 3002) will use the calculated features of the person to determine when certain events happen. For example, in the event detection step, the features of the person are analysed in context in order to identify an action that the person is performing.

Consider the example of Figure 6A of the present disclosure. As explained, Figure 6A shows an example where a feature calculation has been performed in accordance with the tracking data from the data provider to generate a skeletal model of the person. In this example, the event for which the tracking data is provided is a soccer match. Therefore, the apparatus 3000 may analyse the skeletal model of the person which has been generated in order to identify a type of action that person is performing in the context of a soccer match. In examples, the action for a soccer match may be an action from a list such a shot or pass, receiving a kick, saving a goal performing a kick-off (to re-start the game) or the like. Indeed, in examples, there may be a list of actions that can be performed by a player and each of these actions may include an associated skeletal model of a person performing that action. Then, apparatus 3000 may compare the skeletal model of the person which has been generated with the list of actions that can be performed by a player and thus identify when the person is performing a certain type of action. In examples, the list of actions that can be performed by a player may be used as a training set in order to train a trained model (such as a machine learning model or the like). Then, the trained model can be used in order to analyse the skeletal model which has been generated (or, more generally, the output of the feature calculation) in order to identify the action being performed by the person who is the subject of the tracking data.

The type of action which can be performed by a person may vary depending on the situation to which the embodiments of the disclosure are applied. For example, in ice-hockey, the types of actions performed by the person may be very different to the types of actions performed by a player in a soccer match.

In examples, the event detection may be performed individually for each player which has been identified in each sample of validated tracking data. In other examples, the event detection may be performed in context (i.e. by comparing the feature calculation which has been performed for different players and/or different samples of tracking data). This can further improve the identification of an event taking place. For example, if a first player is performing a kicking action towards the goal and a second player is performing a diving action in front of the goal, then it can be identified that the first player has taken a shot at goal which the second player is trying to save.

Furthermore, while described with reference to event detection based on the pose of the person, event detection can also be performed with respect to single point data. Therefore, the present disclosure is not particularly limited in this regard.

Once the event has been detected in the data from the data provider, a calculation may be performed in order to identify the orientation of the players in the tracking data. This does not necessarily require that an output from the event detection is used in the identification of the orientation of the player. Therefore, in examples, event detection and orientation identification can be performed in parallel. In examples, entity orientation calculation can be performed on the basis of the skeletal model which has been generated. Furthermore, the orientation can be determined using a trained model (trained in a manner as described hereinbefore).

Then, on the basis of the feature detection, the event detection and the entity orientation, an animation can be selected from a predetermined list of available animations. That is, the animation detection step of Figure 10 uses features, events and orientation in order to determine which animation from a list of available animations.

The animation which has been selected for a given sample of tracking data can then be combined with animations which have been selected for other samples of tracking data in order to produce a simulation of the event.

<Method>

Hence, more generally, a method of validation of tracking data from a data provider is provided in accordance with embodiments of the disclosure.

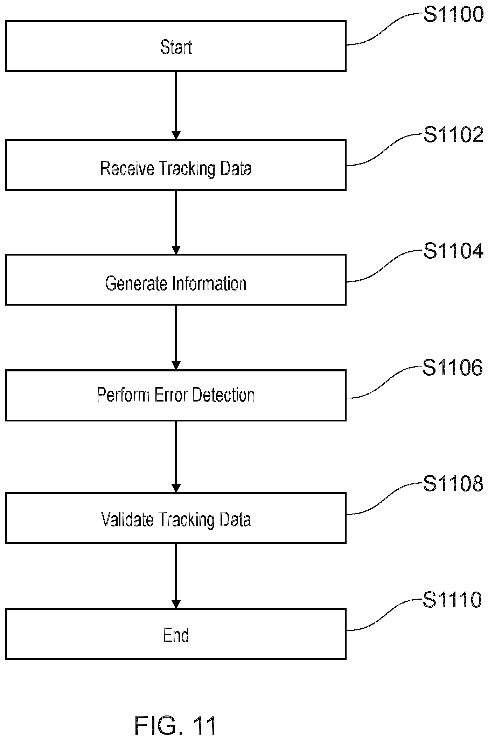

Figure 11 illustrates an example method in accordance with embodiments of the disclosure. The method of Figure 11 starts at step 51100 and proceeds to step S1102.

In step S1102, the method comprises receiving a first sample of tracking data from a data provider, the first sample of tracking data comprising information related to the location of at least one person within a physical environment at a first instance of time.

In step S1104, the method comprises generating information related to one or more features of the at least one person using the sample of tracking data.

Then, in step S1106, the method comprises performing error detection using the information related to the one or more features of the at least one person which has been generated and one or more constraints on features of a person in the physical environment.

In step S1108, the method comprises validating the first sample of tracking data in accordance with a result of the error detection.

The method then proceeds to and ends with step S1110.

It will be appreciated that the present disclosure is not specifically limited to the example method illustrated in Figure 11 of the present disclosure. For example, a number of steps of the method may be performed in a different order than illustrated in Figure 11. In examples, a number of the different steps of the method may be repeated. In examples, a number of the different method steps may be performed in parallel. In examples, one or more additional steps may also be included in the method. Furthermore, it will be appreciated that the method can be applied to multiple samples of tracking data as previously explained.

In examples, the method of Figure 11 may be implemented by an apparatus such as apparatus 1000 or apparatus 3000 of the present disclosure.

In addition, technical features and aspects of the present disclosure may further be arranged in accordance with the following numbered clauses:

1. An apparatus for validation of tracking data from a data provider, the apparatus comprising circuitry configured to:

receive a first sample of tracking data from a data provider, the first sample of tracking data comprising information related to the location of at least one person within a physical environment at a first instance of time;

generate information related to one or more features of the at least one person using the sample of tracking data;

perform error detection using the information related to the one or more features of the at least one person which has been generated and one or more constraints on features of a person in the physical environment;

and validate the first sample of tracking data in accordance with a result of the error detection.

2. The apparatus according to clause 1, wherein the information related to the location of at least one person within the physical environment includes information related to the location of multiple different body parts of the person within the physical environment.

3. The apparatus according to clauses 1 or 2, wherein the physical environment is a sporting environment.

4. The apparatus according to clause 2, wherein the sporting environment includes either ice-hockey, soccer, tennis, rugby, American football or basketball.

5. The apparatus according to any preceding clause, wherein the circuitry is configured to generate a 3D model of the person as information related to one or more features of the person.

6. The apparatus according to clause 5, wherein the 3D model of the person is a skeletal model of the person.

7. The apparatus according to any preceding clause, wherein the circuitry is further configured to interpolate and/or extrapolate the tracking data of the first sample of tracking data to generate information related to one or more features of the at least one person.

8. The apparatus according to any preceding clause, wherein the one or more features of the person include the joints and/or limbs of the person.

9. The apparatus according to any preceding clauses, wherein the one or more constraints on the features of a person in the physical environment include constraints on a limb length of a person, a posture of a person, an action of a person.

10. The apparatus according to any preceding clause, wherein the one or more constraints on the features of the person includes a 3D model of a person in the physical environment.

11. The apparatus according to any preceding clause, wherein the error detection comprises comparison between the information related to one or more features of the at least one person and the one or more constraints on the features of the person in the physical environment.

12. The apparatus according to any preceding clause, wherein the circuitry is configured to perform the error detection using a trained model.

13. The apparatus according to any preceding clause, wherein validation of the tracking data includes identification of an invalid aspect of the tracking data.

14. The apparatus according to any preceding clause, wherein the circuitry is further configured to receive a second sample of tracking data from the data provider, the second sample of tracking data comprising information related to the location of the at least one person within the physical environment at a second instance of time;

generate information related to one or more features of the at least one person using the second sample of tracking data;

perform error detection using the information related to the one or more features of the at least one person which has been generated from the from the first and second sample and the one or more constraints on features of a person in the physical environment; and

validate the first and second sample of tracking data in accordance with a result of the error detection.

15. The apparatus according to clause 14, wherein the one or more constraints on the features of a person in the physical environment include constraints on a limb length of a person, a posture of a person, an action of a person and a movement of a person.

16. The apparatus according to clause 15, wherein validation of the tracking data includes identification of an invalid aspect of the tracking data.

17. The apparatus according to clause 16, wherein an invalid aspect of the tracking data includes invalid identification of a person within the physical environment, invalid data points within the tracking data and/or missing samples of tracking data.

18. The apparatus according to any preceding clause, wherein the circuitry is further configured to generate a validation report including one or more of: an identification of an invalid aspect of the tracking data, a map of location of detected errors in the physical environment and/or a timeline of detected errors.

19. The apparatus according to clause 18, wherein the circuitry is further configured to receive an input instruction from a user, the input instruction for confirming one or more portions of the validation report.

20. The apparatus according to any preceding clause, wherein the circuitry is further configured to perform data correction to correct an invalid aspect of the tracking data.

21. The apparatus according to clause 20, wherein data correction is performed using a trained model.

22. The apparatus according to any preceding clause, wherein the apparatus is further configured to generate a simulation of the physical environment using the validated tracking data.

23. The apparatus according to clause 22 wherein the circuitry is further configured to: identify at least one of an event, an orientation of the at least one person and/or an action of the at least one person from the validated tracking data and generate the simulation using the identified event, orientation of the at least one person and/or action of the at least one person.

24. A method of validation of tracking data from a data provider, the method comprising:

receiving a first sample of tracking data from a data provider, the first sample of tracking data comprising information related to the location of at least one person within a physical environment at a first instance of time;

generating information related to one or more features of the at least one person using the sample of tracking data;

performing error detection using the information related to the one or more features of the at least one person which has been generated and one or more constraints on features of a person in the physical environment;

and validating the first sample of tracking data in accordance with a result of the error detection.

25. A computer program which, when implemented by a computer, causes a computer to perform a method of validation of tracking data from a data provider, the method comprising:

receiving a first sample of tracking data from a data provider, the first sample of tracking data comprising information related to the location of at least one person within a physical environment at a first instance of time;

generating information related to one or more features of the at least one person using the sample of tracking data;

performing error detection using the information related to the one or more features of the at least one person which has been generated and one or more constraints on features of a person in the physical environment;

and validating the first sample of tracking data in accordance with a result of the error detection.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An apparatus for validation of tracking data from a data provider, the apparatus comprising circuitry configured to:

   receive a first sample of tracking data from a data provider, the first sample of tracking data comprising information related to the location of at least one person within a physical environment at a first instance of time;
   generate information related to one or more features of the at least one person using the sample of tracking data;
   perform error detection using the information related to the one or more features of the at least one person which has been generated and one or more constraints on features of a person in the physical environment;
   and validate the first sample of tracking data in accordance with a result of the error detection.

2. The apparatus according to claim 1, wherein the information related to the location of at least one person within the physical environment includes information related to the location of multiple different body parts of the person within the physical environment.

3. The apparatus according to claim 1, wherein the circuitry is configured to generate a 3D model of the person as information related to one or more features of the person.

4. The apparatus according to claim 3, wherein the 3D model of the person is a skeletal model of the person.

5. The apparatus according to claim 1, wherein the circuitry is further configured to interpolate and/or extrapolate the tracking data of the first sample of tracking data to generate information related to one or more features of the at least one person.

6. The apparatus according to claim 1, wherein i) the one or more features of the person include the joints and/or limbs of the person; ii) wherein the one or more constraints on the features of a person in the physical environment include constraints on a limb length of a person, a posture of a person, an action of a person; or iii) wherein the one or more constraints on the features of the person includes a 3D model of a person in the physical environment.

7. The apparatus according to claim 1, wherein i) the error detection comprises comparison between the information related to one or more features of the at least one person and the one or more constraints on the features of the person in the physical environment; or ii) wherein the circuitry is configured to perform the error detection using a trained model.

8. The apparatus according to claim 1, wherein the circuitry is further configured to receive a second sample of tracking data from the data provider, the second sample of tracking data comprising information related to the location of the at least one person within the physical environment at a second instance of time;

   generate information related to one or more features of the at least one person using the second sample of tracking data;
   perform error detection using the information related to the one or more features of the at least one person which has been generated from the from the first and second sample and the one or more constraints on features of a person in the physical environment; and

   validate the first and second sample of tracking data in accordance with a result of the error detection.

9. The apparatus according to claim 8, wherein the one or more constraints on the features of a person in the physical environment include constraints on a limb length of a person, a posture of a person, an action of a person and a movement of a person.

10. The apparatus according to claim 9, wherein validation of the tracking data includes identification of an invalid aspect of the tracking data.

11. The apparatus according to claim 10, wherein an invalid aspect of the tracking data includes invalid identification of a person within the physical environment, invalid data points within the tracking data and/or missing samples of tracking data.

12. The apparatus according to claim 1, wherein the circuitry is further configured to generate a validation report including one or more of: an identification of an invalid aspect of the tracking data, a map of location of detected errors in the physical environment and/or a timeline of detected errors.

13. The apparatus according to claim 18, wherein the circuitry is further configured to receive an input instruction from a user, the input instruction for confirming one or more portions of the validation report.

14. A method of validation of tracking data from a data provider, the method comprising:

   receiving a first sample of tracking data from a data provider, the first sample of tracking data comprising information related to the location of at least one person within a physical environment at a first instance of time;

generating information related to one or more features of the at least one person using the sample of tracking data;

performing error detection using the information related to the one or more features of the at least one person which has been generated and one or more constraints on features of a person in the physical environment;

and validating the first sample of tracking data in accordance with a result of the error detection.

15. A computer program which, when implemented by a computer, causes a computer to perform a method of validation of tracking data from a data provider, the method comprising:

receiving a first sample of tracking data from a data provider, the first sample of tracking data comprising information related to the location of at least one person within a physical environment at a first instance of time;

generating information related to one or more features of the at least one person using the sample of tracking data;

performing error detection using the information related to the one or more features of the at least one person which has been generated and one or more constraints on features of a person in the physical environment;

and validating the first sample of tracking data in accordance with a result of the error detection.

1004

1006

1000

1002

1008

1010

FIG. 1

FIG. 2

3002    3000

FIG. 3

Tracking
Data
Analyzer

Sample received
from provider

Data Validation Frame
Queue

Feature calculation

Error detection

Sample error info

FIG. 4

Tracking Data From
Data Previder

FIG. 5

FIG. 6A

FIG. 6B

FIG. 6C

7000A

FIG. 7

7000

FIG. 8

FIG. 9A

FIG. 9B

**Tracking Data Streamer**

Sample received from provider

**Data Enhancement Frame Queue**

Data Validation

Feature calculation

Event detection

Entity orientations

Animation detection

Sample ready for simulation

FIG. 10

S1100

Start

S1102

Receive Tracking Data

S1104

Generate Information

S1106

Perform Error Detection

S1108

Validate Tracking Data

S1110

End

FIG. 11

Europäisches
Patentamt

European
Patent Office

Office européen
des brevets

# EUROPEAN SEARCH REPORT

**Application Number**

EP 25 15 5071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI RUOTONG ET AL: "Constraint-Based Optimized Human Skeleton Extraction from Single-Depth Camera", SENSORS , vol. 19, no. 11 7 June 2019 (2019-06-07), page 2604, XP093176046, CH ISSN: 1424-8220, DOI: 10.3390/s19112604 Retrieved from the Internet: URL:https://www.ncbi.nlm.nih.gov/pmc/artic les/PMC6603546/pdf/sensors-19-02604.pdf * abstract; figure 3 * * sec. 3.2 * | 1-15 | INV. G06T7/292 G06T7/70 |
| A | CARREIRA JOAO ET AL: "Human Pose Estimation with Iterative Error Feedback", 2016 IEEE CONFERENCE ON COMPUTER VISION AND PATTERN RECOGNITION (CVPR), IEEE, 27 June 2016 (2016-06-27), pages 4733-4742, XP033021665, DOI: 10.1109/CVPR.2016.512 * abstract * | 1-15 | |
| A | HUANG CHING-CHUN ET AL: "Robust 3D Skeleton Tracking based on OpenPose and a Probabilistic Tracking Framework", 2019 IEEE INTERNATIONAL CONFERENCE ON SYSTEMS, MAN AND CYBERNETICS (SMC), IEEE, 6 October 2019 (2019-10-06), pages 4107-4112, XP033667558, DOI: 10.1109/SMC.2019.8913977 * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| The Hague | 5 March 2025 | Mitzel, Dennis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                   

& : member of the same patent family, corresponding
    document

EPO FORM 1503 03.82 (P04C01)